(19) **Europäisches Patentamt / European Patent Office / Office européen des brevets**

(11) **EP 4 439 007 B1**

(12) **EUROPÄISCHE PATENTSCHRIFT**

(45) Veröffentlichungstag und Bekanntmachung des Hinweises auf die Patenterteilung:
**06.08.2025   Patentblatt 2025/32**

(51) Internationale Patentklassifikation (IPC):
**G01B 21/12** *(2006.01)*     **B61K 9/00** *(2006.01)*
**B61L 99/00** *(2006.01)*

(21) Anmeldenummer: **23165999.6**

(22) Anmeldetag: **31.03.2023**

(52) Gemeinsame Patentklassifikation (CPC):
**G01B 21/12; B61K 9/12; B61L 3/125;**
**B61L 15/0081; B61L 25/026**

(54) **VERFAHREN UND EINRICHTUNG ZUM ERMITTELN DES RADDURCHMESSERS EINES RADES EINES FAHRZEUGS**

METHOD AND DEVICE FOR DETERMINING THE WHEEL DIAMETER OF A WHEEL OF A VEHICLE

PROCÉDÉ ET DISPOSITIF DE DÉTERMINATION DU DIAMÈTRE DE ROUE D'UNE ROUE D'UN VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**02.10.2024   Patentblatt 2024/40**

(73) Patentinhaber: **Siemens Mobility GmbH**
**81739 München (DE)**

(72) Erfinder:
- **Giere, Steffen**
  **38159 Vechelde (DE)**
- **Kohn, Markus**
  **38108 Braunschweig (DE)**

- **Meschter, Frank**
  **38102 Braunschweig (DE)**
- **Preuk, Clemens**
  **38126 Braunschweig (DE)**
- **Schenke, Oliver**
  **38159 Vechelde (DE)**

(74) Vertreter: **Siemens Patent Attorneys**
**Postfach 22 16 34**
**80506 München (DE)**

(56) Entgegenhaltungen:
**DE-A1- 102016 223 435     JP-A- H02 247 522**
**US-A1- 2013 158 894**

**Beschreibung**

Die Erfindung bezieht sich unter anderem auf ein Verfahren zum Ermitteln des Raddurchmessers eines Fahrzeugrades. Bekanntermaßen muss im Bereich der Eisenbahntechnik der Raddurchmesser von Rädern, die zur Wegstreckenmessung herangezogen werden, aufgrund auftretenden Materialabriebs regelmäßig gemessen werden, damit eine korrekte Weg- und Geschwindigkeitsmessung und eventuell eine damit verbundene Zugsicherung möglich ist. Solche Zugsicherungssysteme sind beispielsweise aus US2013158894 A1, JPH0692897B B2 und DE102016223435 A1 bekannt.

Der Erfindung liegt die Aufgabe zugrunde, ein Verfahren zum Ermitteln von Raddurchmessern anzugeben, das besonders einfach durchführbar ist, aber dennoch sehr genaue Ergebnisse liefern kann.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass während der Fahrt ein Passieren eines Streckenpunkts mit einer in Fahrtrichtung vorderen Detektionseinrichtung als erstes Passierereignis detektiert wird, während der weiteren Fahrt ein Passieren desselben Streckenpunkts mit einer in Fahrtrichtung hinteren Detektionseinrichtung als zweites Passierereignis detektiert wird, die Raddrehung des Rades messtechnisch erfasst wird und eine die Radumdrehung zwischen dem ersten und zweiten Passierereignis angebende Raddrehwinkelangabe ermittelt wird, und anhand des Abstands zwischen der vorderen und der hinteren Detektionseinrichtung und der Raddrehwinkelangabe ein den Raddurchmesser angebender aktueller Messwert ermittelt wird.

Ein wesentlicher Vorteil des erfindungsgemäßen Verfahrens ist darin zu sehen, dass jeder einzelne detektierbare Streckenpunkt jeweils für sich allein eine Messung der Raddurchmesser ermöglicht; es müssen also streckenseitig keine speziellen Messstrecken installiert werden.

Ein weiterer wesentlicher Vorteil des erfindungsgemäßen Verfahrens besteht darin, dass quasi alle fahrzeugseitig erfassbaren Streckenpunkte zur Messung der Raddurchmesser herangezogen werden können, also beispielsweise jede im Gleis vorhandene Balise, sodass eine kontinuierliche Überwachung der Raddurchmesser fahrzeugseitig bereits während der Fahrt möglich ist.

Noch ein weiterer wesentlicher Vorteil des erfindungsgemäßen Verfahrens ist darin zu sehen, dass das Verfahren Wartungszeit einspart, da es während des normalen Fahrbetriebs durchgeführt werden kann und selbst keine Wartungstätigkeit erforderlich macht.

Noch ein weiterer wesentlicher Vorteil des erfindungsgemäßen Verfahrens ist darin zu sehen, dass durch die gegenüber bisherigen Verfahren potentiell hohe Anzahl an Messvorgängen eine statistische Auswertung der Messergebnisse (z. B. bereits im Fahrzeug) samt einer Erkennung von potentiellen Fehlmessungen möglich wird.

Da das Verfahren wegen der potentiell hohen Zahl an Messvorgängen indirekt auch eine regelmäßige Überprüfung der Messtechnik ermöglicht, kann in vorteilhafter Weise - abhängig von den sicherheitstechnischen Anforderungen - auf eine von den genannten Detektionseinrichtungen unabhängige zweite Wegmesseinrichtung verzichtet werden und/oder ein zusätzliches Stillstandskriterium eingespart werden.

Vorteilhaft ist es, wenn das Fahrzeug zwischen dem ersten und zweiten Passierereignis mit konstanter Geschwindigkeit betrieben wird, um Radschlupf während der Messung zu minimieren.

Das Fahrzeug kann zwei oder mehr miteinander gekuppelte Wagen aufweisen. Die vordere und hintere Detektionseinrichtung können beispielsweise durch ein oder mehr Kupplungen voneinander getrennt sein.

Im letztgenannten Falle ist bei bevorzugten Ausgestaltungen des Verfahrens vorgesehen, dass das Fahrzeug zwischen dem ersten und zweiten Passierereignis entweder mit konstanter Geschwindigkeit, wie bereits erwähnt, oder ungebremst und antriebsfrei betrieben wird; bei beiden Ausgestaltungen werden die Kupplungen in ihrer Gesamtheit eine mittlere Normalstellung einnehmen, die im Allgemeinen in der Mitte zwischen einem gestauchten und einem gestreckten Zustand der Kupplungen liegt.

Alternativ kann in vorteilhafter Weise vorgesehen werden, dass das Fahrzeug zwischen dem ersten und zweiten Passierereignis mit fest vordefinierten Antriebsverhältnissen angetrieben wird, um gewünschte andere Kupplungszustände einzustellen, wie beispielsweise gezielt gestauchte Kupplungen oder gezielt gestreckte Kupplungen; die Kupplungszustände beeinflussen den Abstand zwischen den Detektionseinrichtungen und werden vorzugsweise bei der Ermittlung der Messwerte berücksichtigt.

Die fest vordefinierten Antriebsverhältnisse können vorsehen, dass das Fahrzeug ausschließlich mit einer oder mehreren Antriebseinheiten angetrieben wird, die den mit der vorderen Detektionseinrichtung ausgestatteten Wagen und/oder in Fahrtrichtung davor befindliche Wagen antreiben. Durch diese Vorgehensweise lassen sich - bei Fahrt in der Ebene oder einer Bergfahrt - in einfacher Weise gezielt gestreckte Kupplungen einstellen, und es kann für die Messung der Raddurchmesser ein Abstand zwischen den Detektionseinrichtungen für den Fall gestreckter Kupplungen herangezogen werden.

Alternativ können die fest vordefinierten Antriebsverhältnisse in vorteilhafter Weise vorsehen, dass das Fahrzeug ausschließlich mit einer oder mehreren Antriebseinheiten angetrieben wird, die den mit der hinteren Detektionseinrichtung ausgestatteten Wagen und/oder in Fahrtrichtung dahinter befindliche Wagen antreiben. Durch diese Vorgehensweise lassen sich - bei Fahrt in der Ebene oder einer Bergfahrt - in einfacher Weise gezielt gestauchte Kupplungen einstellen, und für die Messung der Raddurchmesser kann ein Abstand zwischen den Detektionseinrichtungen für den Fall gestauchter Kupplungen herangezogen werden.

Das Fahrzeug wird zwischen dem ersten und zweiten Passierereignis vorzugsweise derart betrieben, dass zumindest das Rad, dessen Raddurchmesser ermittelt werden soll, nicht angetrieben und nicht gebremst wird; diese Vorgehensweise reduziert die Gefahr, dass Schlupf die Messung verfälscht.

Der aktuelle Messwert wird vorzugsweise einer Plausibilitätsprüfung unterzogen. Vorteilhaft ist es, wenn der aktuelle Messwert ausschließlich bei Plausibilität zur Bildung einer neuen Durchmesserangabe herangezogen wird, die eine vorherige Durchmesserangabe ersetzt.

Im Rahmen der Plausibilitätsprüfung wird der jeweils aktuelle Messwert vorzugsweise mit einem oder mehr vorherigen, sich auf dasselbe Rad beziehenden Durchmesserangaben und/oder mit einem Prognosewert verglichen, der anhand eines oder mehr vorheriger, sich auf dasselbe Rad beziehenden Durchmesserangaben gebildet worden ist. Der Prognosewert berücksichtigt vorzugsweise die seit der letzten Messung gefahrene Fahrstrecke und den bekannten oder geschätzten durchschnittlichen Radabrieb pro Kilometer Fahrstrecke; im Idealfall sollte der Prognosewert dem aktuell gemessenen Messwert weitestgehend entsprechen.

Es kann also mit anderen Worten in vorteilhafter Weise vorgesehen sein, dass im Rahmen der Plausibilitätsprüfung geprüft wird, ob der jeweils aktuelle Messwert mit der jeweils vorherigen Durchmesserangabe, der seit der vorherigen Messung zurückgelegten Wegstrecke und dem zu erwartenden Radabrieb korrespondiert.

Vorzugsweise wird die vorherige Durchmesserangabe um einen vorgegebenen konstanten Differenzwert reduziert und es wird vorzugsweise diese reduzierte Durchmesserangabe als neue Durchmesserangabe angesehen, wenn der jeweils aktuelle Messwert kleiner als die vorherige Durchmesserangabe abzüglich des vorgegebenen konstanten Differenzwerts ist. Andernfalls wird die vorherige Durchmesserangabe weiterhin als aktuelle Durchmesserangabe angesehen. Bei dieser Vorgehensweise wird die Durchmesserangabe immer nur in Inkrementen reduziert, sodass eine einzige Messung allein keine unplausiblen Sprünge in den aktuellen Durchmesserangaben verursachen kann.

Von Vorteil ist es auch, wenn die Ermittlung des aktuellen Messwerts unter Einbezug eines Streckenatlas durchgeführt wird, indem aus dem Streckenatlas für denjenigen Streckenpunkt, für den die aktuelle Messung durchgeführt wird, zumindest eine Zusatzangabe ausgelesen wird.

Die Zusatzangabe oder zumindest eine der Zusatzangaben ist vorzugsweise eine Messgenauigkeitsangabe, die die Messgenauigkeit der Messwerte für den jeweiligen Streckenpunkt angibt.

Alternativ kann die Zusatzangabe oder zumindest eine der Zusatzangaben die Eignung, die fehlende Eignung und/oder das Maß der Eignung des jeweiligen Streckenpunkts für die Ermittlung einer neuen aktuellen Durchmesserangabe beschreiben.

Auch kann vorgesehen sein, dass die Zusatzangabe oder zumindest eine der Zusatzangaben eine Gefälleangabe ist, aus der sich ableiten lässt, ob beim Passieren des Streckenpunkts eine Talfahrt oder eine Bergfahrt erfolgt. Anhand einer solchen Zusatzangabe kann der Abstand zwischen den Detektionseinrichtungen mit Blick auf gestauchte oder auseinander gezogene Kupplungen zwischen den Detektionseinrichtungen korrigiert werden, bevor auf der Basis des angenommenen Abstands der aktuelle Messwert errechnet wird.

Die jeweils aktuell ermittelten Messwerte werden für jeden Streckenpunkt vorzugsweise radindividuell abgespeichert.

Eine statistische Auswertung der abgespeicherten radindividuellen Messwerte wird vorzugsweise radbezogen für jeden Streckenpunkt (besonders bevorzugt auch unter Einbezug von Messwerten von streckenmäßig benachbarten Streckenpunkten) unter Bildung von Zusatzangaben wie Streckenpunkteignungsangaben oder Messgenauigkeitsangaben durchgeführt. Die Streckenpunkteignungsangaben und die Messgenauigkeitsangaben werden vorzugsweise als Zusatzangaben in dem Streckenatlas abgespeichert.

Die Zusatzangaben können beispielsweise bei Streckenpunkten, die in Kurvenbereichen liegen, den Einfluss des Krümmungsradius auf die Messwerte quantitativ beschreiben.

Die Erfindung bezieht sich darüber hinaus auf eine Messeinrichtung. Erfindungsgemäß ist bezüglich der Messeinrichtung vorgesehen, dass diese zwei in Fahrzeuglängsrichtung beabstandete Detektionseinrichtungen, einen Drehwinkelsensor und eine Auswerteinrichtung aufweist, wobei die Detektionseinrichtungen geeignet sind, das Passieren von Streckenpunkten zu detektieren, und wobei die Auswerteinrichtung dazu ausgestaltet ist, anhand erkannter Passierereignisse, anhand von Drehwinkelangaben des Drehwinkelsensors und anhand des Abstands zwischen den Detektionseinrichtungen einen den Raddurchmesser angebenden aktuellen Messwert zu ermitteln.

Bezüglich der Vorteile der erfindungsgemäßen Messeinrichtung sowie vorteilhafter Ausgestaltungen der erfindungsgemäßen Messeinrichtung sei auf die obigen Ausführungen im Zusammenhang mit dem erfindungsgemäßen Verfahren und dessen vorteilhafter Ausgestaltungen verwiesen.

Die Erfindung bezieht sich darüber hinaus auf ein Computerprogrammprodukt für ein Schienenfahrzeug. Erfindungsgemäß ist bezüglich eines solchen Computerprogrammprodukts vorgesehen, dass dieses Programmbefehle umfasst, die bei Ausführung durch eine Recheneinrichtung, insbesondere eine Recheneinrichtung eines Zugsicherungs- oder Zugsteuerungssystems, diese dazu veranlassen, ein Verfahren wie oben beschrieben auszuführen.

Bezüglich der Vorteile des erfindungsgemäßen Computerprogrammprodukts sowie vorteilhafter Ausgestaltungen des erfindungsgemäßen Computerprogrammprodukts sei auf die obigen Ausführungen im Zusammenhang mit dem erfindungsgemäßen Verfahren und dessen vorteilhafter Ausgestaltungen verwiesen.

Die Erfindung bezieht sich darüber hinaus auf ein Schienenfahrzeug. Erfindungsgemäß ist bezüglich eines solchen Schienenfahrzeugs vorgesehen, dass dieses eine Messeinrichtung wie oben beschrieben aufweist und/oder derart ausgestaltet ist, dass es ein Verfahren wie oben beschrieben ausführen kann.

Die Auswerteinrichtung der Messeinrichtung ist vorzugsweise als Computerprogrammprodukt in ein Zugsicherungs- oder Zugsteuerungssystem des Schienenfahrzeugs integriert.

Die Erfindung wird nachfolgend anhand von Ausführungsbeispielen näher erläutert; dabei zeigen beispielhaft:

Figur 1     ein Ausführungsbeispiel für ein erfindungsgemäßes Schienenfahrzeug bei einem ersten Überfahren einer Balise,

Figur 2     das Schienenfahrzeug gemäß Figur 1 bei einem zweiten Überfahren derselben Balise,

Figur 3     anhand eines Flussdiagramms ein Ausführungsbeispiel für ein Verfahren zum Ermitteln des Raddurchmessers eines Rads des Schienenfahrzeugs gemäß den Figuren 1 und **2,**

Figur 4     ein Ausführungsbeispiel für eine Auswerteinrichtung für das Schienenfahrzeug gemäß den Figuren 1 und **2,**

Fig. 5-7     Ausführungsvarianten des Ausführungsbeispiels gemäß Figur **4,**

Figur 8     das Schienenfahrzeug gemäß den Figuren 1 und 2 bei Bergfahrt im Zugbetrieb,

Figur 9     das Schienenfahrzeug gemäß den Figuren 1 und 2 bei Bergfahrt im Schiebebetrieb, und

Figur 10     eine weitere Ausführungsvariante des Ausführungsbeispiels gemäß Figur **4.**

In den Figuren werden der Übersicht halber für identische oder vergleichbare Komponenten stets dieselben Bezugszeichen verwendet.

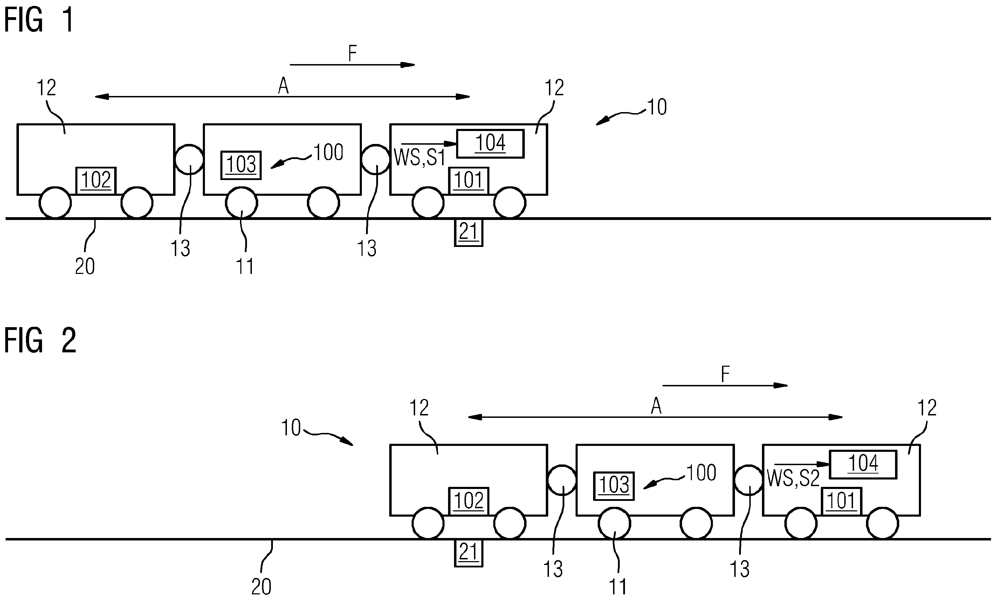

Die Figur 1 zeigt ein Ausführungsbeispiel für ein erfindungsgemäßes Schienenfahrzeug, das in Form eines Eisenbahnzugs 10 ausgestaltet ist und mehrere mittels Kupplungen 13 miteinander verkuppelte Wagen 12 aufweist.

Der Eisenbahnzug 10 fährt entlang einer Fahrtrichtung F auf einer Eisenbahngleisanlage 20 in Richtung auf einen Streckenpunkt, der beispielsweise durch eine Balise 21 gebildet sein kann.

Der Eisenbahnzug 10 ist mit einer Messeinrichtung 100 ausgestattet, die eine entlang der Fahrtrichtung F gesehen vordere Detektionseinrichtung 101, eine entlang der Fahrtrichtung F gesehen hintere Detektionseinrichtung 102, zumindest einen Drehwinkelsensor 103 und eine Auswerteinrichtung 104 aufweist. Die Detektionseinrichtungen 101 und 102 und der Drehwinkelsensor 103 sind mit der Auswerteinrichtung 104 über nicht gezeigte Leitungen wie beispielsweise einen Datenbus oder über Funk verbunden.

Die Detektionseinrichtungen 101 und 102 können nicht weiter dargestellte Antennen umfassen oder durch solche gebildet sein, die Funksignale von streckenseitigen Einrichtungen wie beispielsweise der Balise 21 empfangen können.

Der Drehwinkelsensor 103 kann beispielsweise als Drehimpulsgeber bzw. Inkrementalgeber ausgestaltet sein und dazu dienen, die Drehung eines der Räder 11 des Eisenbahnzugs 10 oder die Drehung der Radachse des Rads 11 zu überwachen und für jedes gedrehte Drehwinkelinkrement ein Winkelinkrementsignal WS zu der Auswerteinrichtung 104 zu übermitteln. Die Auswerteinrichtung 104 ist somit in der Lage, durch ein Überwachen des Auftretens der Winkelinkrementsignale WS auf die Drehbewegung des Rades 11 und - bei Schlupffreiheit - auf die vom Rad 11 zurückgelegte Wegstrecke zu schließen.

In der Figur 1 ist lediglich ein einziger Drehwinkelsensor 103 gezeigt, weil die Arbeitsweise der Messeinrichtung 100 beispielhaft für den Fall einer Messung des Raddurchmessers des Rades 11 erläutert werden soll. In entsprechender Weise können aber auch die Raddurchmesser der anderen Räder des Eisenbahnzuges 10 gemessen werden, wenn diesen entsprechende Drehwinkelsensoren zugeordnet sind und der Auswerteinrichtung 104 entsprechende Winkelinkrementsignale WS geliefert werden.

Die Figur 1 zeigt den Eisenbahnzug 10, während er mit seiner vorderen Detektionseinrichtung 101 die Balise 21 überfährt. Sobald die vordere Detektionseinrichtung 101 dieses erste Passierereignis erfasst, so erzeugt sie ein erstes Passierereignissignal S1 und überträgt dieses zur Auswerteinrichtung 104. Die Auswerteinrichtung 104 kann beispielsweise nach Eintreffen des ersten Passierereignissignals S1 beginnen, die Winkelinkrementsignale WS des Drehwinkelsensors 103 zu zählen.

Die Figur 2 zeigt den Eisenbahnzug 10 während seiner weiteren Fahrt und zu einem Zeitpunkt, an dem die hintere Detektionseinrichtung 102 die Balise 21 überfährt. Sobald die hintere Detektionseinrichtung 102 dieses zweite Passierereignis detektiert, so erzeugt sie ein zweites Passierereignissignal S2 und überträgt dieses zu der Auswerteinrichtung 104.

Die Auswerteinrichtung 104 kann nach dem Eintreffen des zweiten Passierereignissignals S2 die Zählung der Winkelinkrementsignale WS des Drehwinkelsensors 103 stoppen bzw. den Zählerstand ZS, wie er beim Eintreffen des zweiten Passierereignissignals S2 vorliegt, abspeichern.

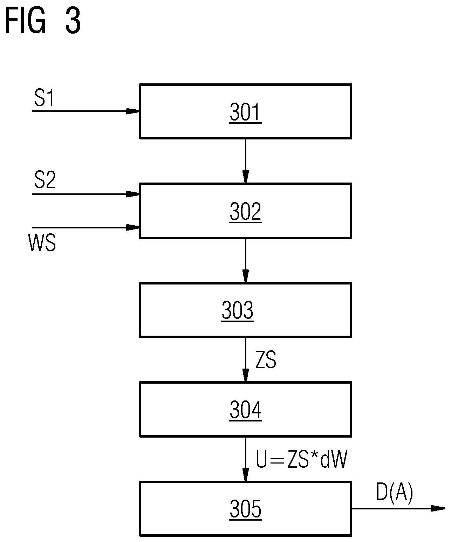

Die Figur 3 zeigt anhand eines Flussdiagramms, wie die Auswerteinrichtung 104 den Raddurchmesser des Rades 11 beispielsweise ermitteln kann:

In einem Überwachungsschritt 301 überwacht die Auswerteinrichtung 104 die Detektionseinrichtungen 101 und 102 auf das Auftreten eines Passierereignissignals.

Sobald die Auswerteinrichtung 104 von der in Fahrtrichtung F vorderen Detektionseinrichtung 101 ein erstes Passierereignissignal S1 empfängt, das ein erstes Passieren bzw. ein erstes Überfahren der Balise 21 anzeigt, so beginnt sie einen Zählschritt 302.

Während des Zählschritts 302 zählt die Auswerteinrichtung 104 die ab dem erkannten ersten Passieren der Balise 21 eintreffenden Winkelinkrementsignale WS des Drehwinkelsensors 103.

Sobald die Auswerteinrichtung 104 ein zweites Passierereignissignal S2 empfängt, das ein Passieren bzw. Überfahren der Balise 21 mit der in Fahrtrichtung F hinteren Detektionseinrichtung 102 anzeigt, so beendet die Auswerteinrichtung 104 den Zählschritt 302 und speichert in einem Speicherschritt 303 den im Zählschritt 302 ermittelten Zählerstand ZS ab.

In einem Radumdrehungsermittlungsschritt 304 ermittelt die Auswerteinrichtung 104 die Anzahl der Radumdrehungen, die zwischen dem ersten und zweiten Passier- bzw. Überfahrereignis stattgefunden haben, in Form einer Raddrehwinkelangabe U, indem sie den Zählerstand ZS mit dem Drehwinkelinkrementwert dW des Drehwinkelsensors 103 multipliziert gemäß:

$$U = ZS * dW$$

Der Drehwinkelinkrementwert dW beschreibt den Drehwinkel, der die Erzeugung eines jeden der Winkelinkrementsignale WS des Drehwinkelsensors 103 auslöst und beispielsweise 1° betragen kann.

In einem nachfolgenden Durchmesserermittlungsschritt 305 ermittelt die Auswerteinrichtung 104 den Durchmesser des Rades 11 unter der Annahme, dass kein Schlupf stattgefunden hat, beispielsweise gemäß:

$$D = (A * 360°)/(U * \pi)$$

wobei $\pi$ die Kreiszahl Pi, D einen den Durchmesser des Rads 11 angebenden aktuellen Messwert und A den Abstand zwischen den Detektionseinrichtungen 101 und 102 bezeichnet.

Die Arbeitsweise der Auswerteinrichtung 104 ist oben beispielhaft für den Fall zweier Detektionseinrichtungen erläutert worden. Falls das Schienenfahrzeug mehr als zwei Detektionseinrichtungen aufweist, so können die Raddurchmesser jeweils für jedes Paar an Detektionseinrichtungen gemessen werden, sodass eine Vielzahl an Messwerten anhand einer einzigen Balise 21 ermittelt werden kann. Die Vielzahl an Messwerten kann einer Mittelwertbildung unterzogen werden oder in anderer Weise statistisch ausgewertet werden.

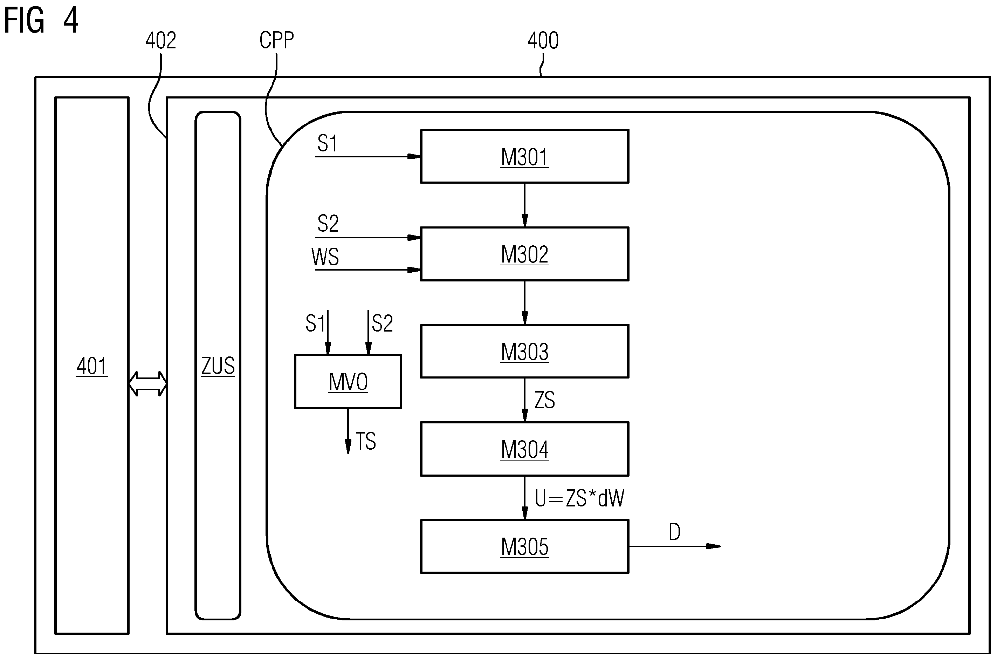

Die Figur 4 zeigt ein erstes Ausführungsbeispiel für eine Auswerteinrichtung 104, die bei dem Eisenbahnzug 10 gemäß den Figuren 1 und 2 eingesetzt werden kann und für die Durchführung des in der Figur 3 gezeigten Verfahrens geeignet ist.

Die Auswerteinrichtung gemäß Figur 4 ist softwaremäßig als Computerprogrammprodukt CPP in ein Zugsicherungs- und/oder Zugsteuerungssystem 400 integriert.

Das Zugsicherungs- und/oder Zugsteuerungssystem 400 umfasst eine Recheneinrichtung 401 und einen Speicher 402, in dem das Computerprogrammprodukt CPP und Zugsicherungs- und/oder Zugsteuerungssoftware ZUS abgespeichert sind. Die Zugsicherungs- und/oder Zugsteuerungssoftware ZUS gewährleistet die übliche Zugsicherungs- und/oder Zugsteuerungsarbeit des Zugsicherungs- und/oder Zugsteuerungssystems 400.

Bei dem Ausführungsbeispiel gemäß Figur 4 umfasst das Computerprogrammprodukt CPP ein Überwachungssoftwaremodul M301, das bei Ausführung durch die Recheneinrichtung 401 diese veranlasst, den im Zusammenhang mit der Figur 3 beschriebenen Überwachungsschritt 301 durchzuführen, ein Zählsoftwaremodul M302, das bei Ausführung durch die Recheneinrichtung 401 diese veranlasst, den im Zusammenhang mit der Figur 3 beschriebenen Zählschritt 302 durchzuführen, ein Speichersoftwaremodul M303, das bei Ausführung durch die Recheneinrichtung 401 diese veranlasst, den im Zusammenhang mit der Figur 3 beschriebenen Speicherschritt 303 durchzuführen, ein Softwaremodul M304 zur Radumdrehungsermittlung, das bei Ausführung durch die Recheneinrichtung 401 diese veranlasst, den im Zusammenhang mit der Figur 3 beschriebenen Radumdrehungsermittlungsschritt 304 durchzuführen, und ein Softwaremodul M305 zur Durchmesserermittlung, das bei Ausführung durch die Recheneinrichtung 401 diese veranlasst, den im Zusammenhang mit der Figur 3 beschriebenen Durchmesserermittlungsschritt 305 durchzuführen.

Bezüglich der Arbeitsweise der Softwaremodule M301 bis M305 sei auf die obigen Erläuterungen im Zusammenhang mit der Figur 3 verwiesen, die für die Softwaremodule M301 bis M305 entsprechend gelten.

Um ein möglichst exaktes Ergebnis bei der Messung des Durchmessers des Rads 11 zu erreichen, sollte während der Messung ein Schlupf des Rades 11 vermieden werden; dies lässt sich beispielsweise erreichen, wenn das Rad 11 in der Messphase zwischen dem ersten Passieren der Balise 21 durch die vordere Detektionseinrichtung 101 und dem zweiten Passieren der Balise 21 durch die hintere Detektionseinrichtung 102 kraftfrei betrieben wird, also weder gebremst noch angetrieben wird.

Bei der Darstellung gemäß den Figuren 1 und 2 wird beispielhaft davon ausgegangen, dass der Eisenbahnzug 10 mit konstanter Geschwindigkeit fährt und sich das Kupplungsspiel der Kupplungen 13 in der Gesamtheit ausmittelt, also sich die Kupplungen 13 in ihrer Gesamtheit betrachtet in einem ungestauchten und ungestreckten mittleren Normalzustand befinden; der Abstand A in Figur 1 zwischen den Detektionseinrichtungen 101 und 102 bezieht sich auf diesen Normalzustand.

Eine konstante Geschwindigkeit sowie ein kraftfreier Betrieb des Rads 11 in der Zeitspanne zwischen dem Erhalt des ersten Passierereignissignals S1 und dem Erhalt des zweiten Passierereignissignals S2 können beispielsweise von einem Vorgabemodul MVO durch ein Triggersignal TS ausgelöst werden, das von einem nicht weiter dargestellten Fahrsteuermodul der Zugsicherungs- und/oder Zugsteuerungssoftware ZUS verarbeitet wird.

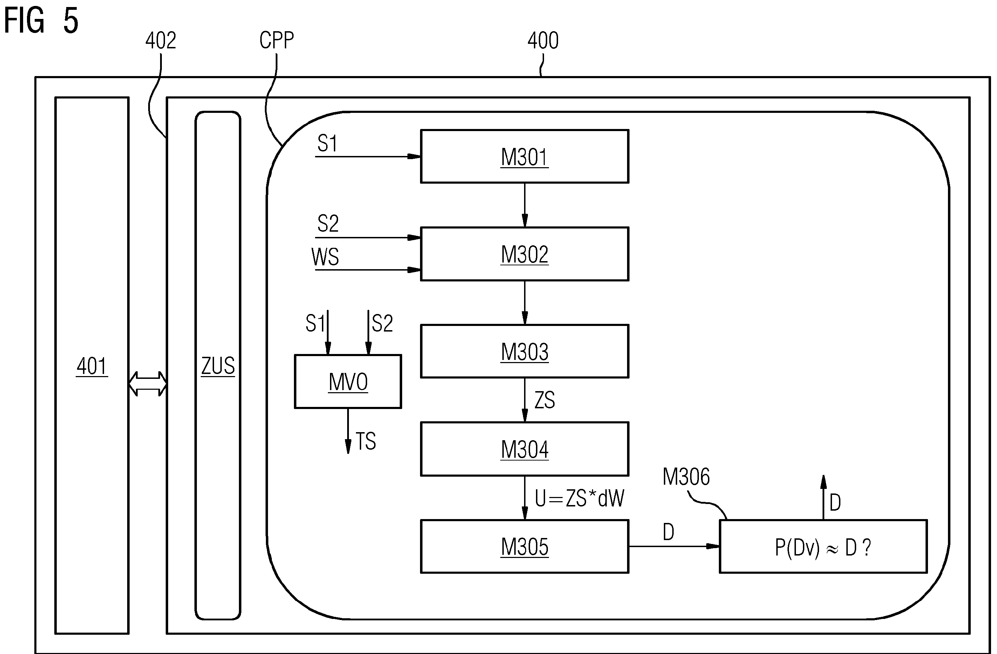

Die Figur 5 zeigt als zweites Ausführungsbeispiel für eine Auswerteinrichtung 104, die bei dem Eisenbahnzug 10 gemäß den Figuren 1 und 2 eingesetzt werden kann, eine Ausführungsvariante des ersten Ausführungsbeispiels.

Bei der Ausführungsvariante gemäß Figur 5 umfasst das Computerprogrammprodukt CPP außerdem ein Plausibilitätsmodul M106, das bei Ausführung durch die Recheneinrichtung 401 eine Plausibilitätsprüfung veranlasst.

Im Rahmen der Plausibilitätsprüfung werden unplausible Messwerte D verworfen; nur wenn ein Messwert D plausibel erscheint, wird er weiter berücksichtigt bzw. nach außen ausgegeben.

Im Rahmen der Plausibilitätsprüfung kann der jeweils aktuelle Messwert D mit einem oder mehreren vorherigen, sich auf dasselbe Rad 11 beziehenden Durchmesserangaben verglichen werden. Im Rahmen eines solchen Vergleichs kann beispielsweise geprüft werden, ob der jeweils aktuelle Messwert D mit einer vorherigen Durchmesserangabe Dv und der seit der vorherigen Messung zurückgelegten Wegstrecke korrespondiert.

Die Plausibilitätsprüfung kann beispielsweise auf einer Prognose basieren, bei der ein Prognosewert P ermittelt wird. Der Prognosewert P kann ein auf der Basis der vorherigen Durchmesserangabe Dv und der seitdem zurückgelegten Wegstrecke geschätzter Durchmesserwert sein; ein solcher geschätzter Durchmesserwert kann bei der Plausibilitätsprüfung mit dem aktuellen Messwert D verglichen werden: Unterscheiden sich die Werte über ein vorgegebenes Maß hinaus, wird der aktuelle Messwert D verworfen.

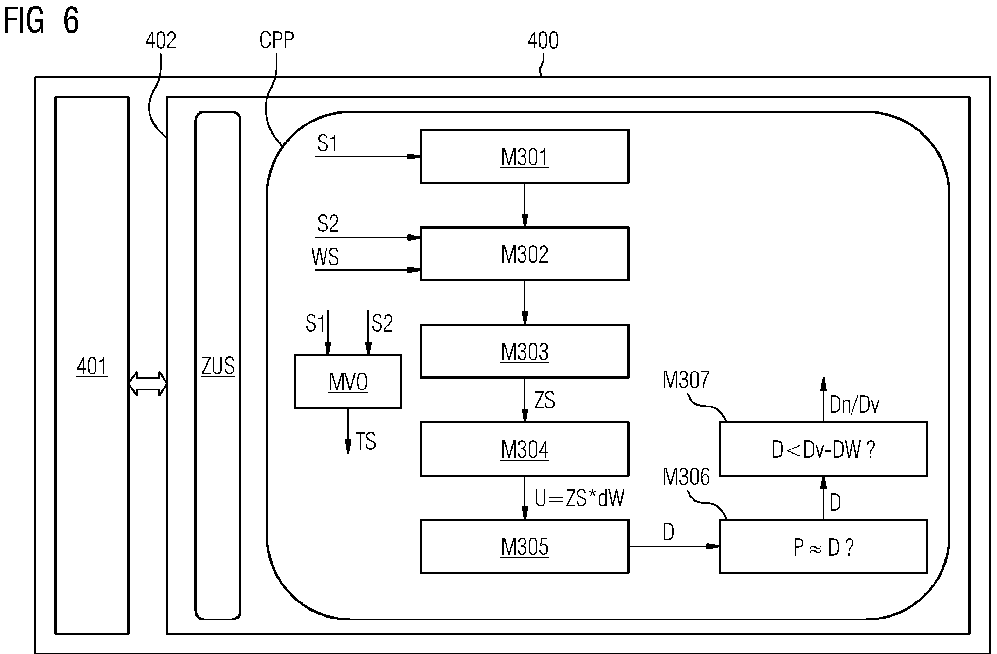

Die Figur 6 zeigt als drittes Ausführungsbeispiel für eine Auswerteinrichtung 104, die bei dem Eisenbahnzug 10 gemäß den Figuren 1 und 2 eingesetzt werden kann, eine Ausführungsvariante des zweiten Ausführungsbeispiels.

Bei der Ausführungsvariante gemäß Figur 6 ist außerdem ein Ausgabemodul M307 vorhanden, das bei Ausführung durch die Recheneinrichtung 401 eine modifizierte Ausgabe des aktuellen Messwerts D veranlasst bzw. bewirkt, dass anstelle des aktuellen Messwerts D eine von diesem losgelöste Durchmesserangabe Dn bzw. Dv ausgegeben wird.

Das Ausgabemodul M307 reduziert die vorherige Durchmesserangabe Dv, die vor der Erfassung des aktuellen Messwerts D gebildet worden ist, um einen vorgegebenen konstanten Differenzwert DW (z. B. DW = 1mm) und gibt diese reduzierte Durchmesserangabe als neue Durchmesserangabe Dn aus, wenn der jeweils aktuelle Messwert D kleiner als die vorherige Durchmesserangabe Dv abzüglich des vorgegebenen konstanten Differenzwerts DW ist. Andernfalls, wenn diese Bedingung also nicht erfüllt wird, wird die vorherige Durchmesserangabe Dv weiter als aktuelle Durchmesserangabe ausgegeben. Die Durchmesserangaben werden also immer nur in Inkrementen reduziert, sodass eine einzige Messung allein keine unplausiblen Sprünge in den Messwerten verursachen kann.

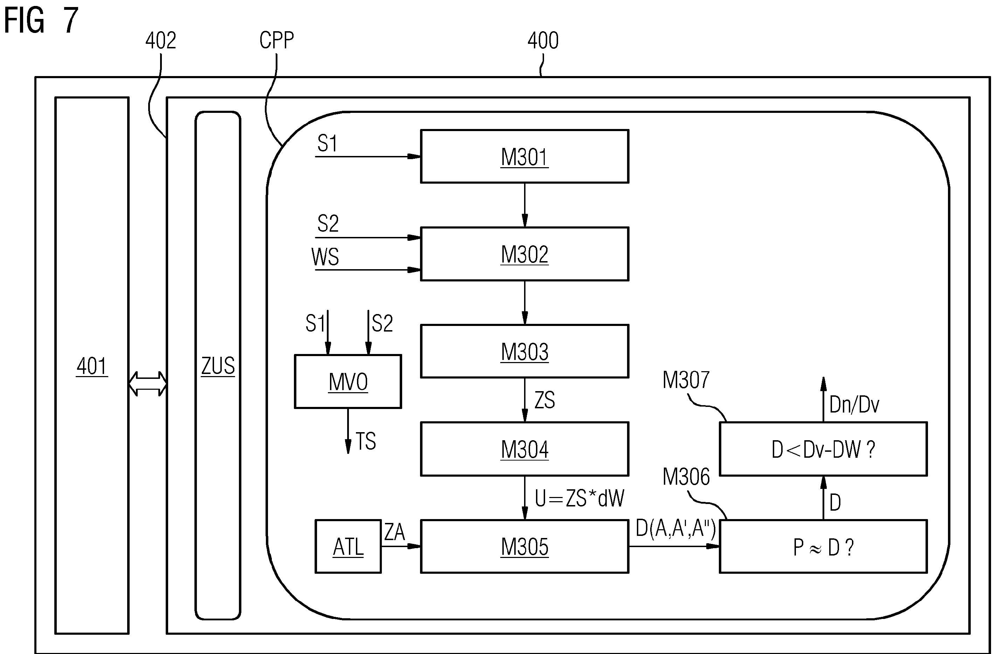

Die Figur 7 zeigt als viertes Ausführungsbeispiel für eine Auswerteinrichtung 104, die bei dem Eisenbahnzug 10 gemäß den Figuren 1 und 2 eingesetzt werden kann, eine Ausführungsvariante des dritten Ausführungsbeispiels.

Bei der Ausführungsvariante gemäß Figur 7 arbeitet das Softwaremodul M305 zur Durchmesserermittlung mit einem Streckenatlas ATL zusammen, in dem streckenbezogene Zusatzangaben ZA abgespeichert sind.

Das Softwaremodul M305 kann aus dem Streckenatlas ATL beispielsweise als streckenbezogene Zusatzangabe ZA eine Messgenauigkeitsangabe auslesen, die die Messgenauigkeit der Messwerte D für den jeweiligen Streckenpunkt, hier also die Balise 21, angeben, oder die Eignung, die fehlende Eignung und/oder das Maß der Eignung der Balise 21 für die Ermittlung eines neuen Messwerts beschreiben. Eine ausgelesene Messgenauigkeitsangabe kann beispielsweise gemeinsam mit dem jeweiligen Messwert D zum Plausibilitätsmodul M306 übertragen werden, damit dieses die Messgenauigkeit bei der Plausibilitätsprüfung berücksichtigen kann.

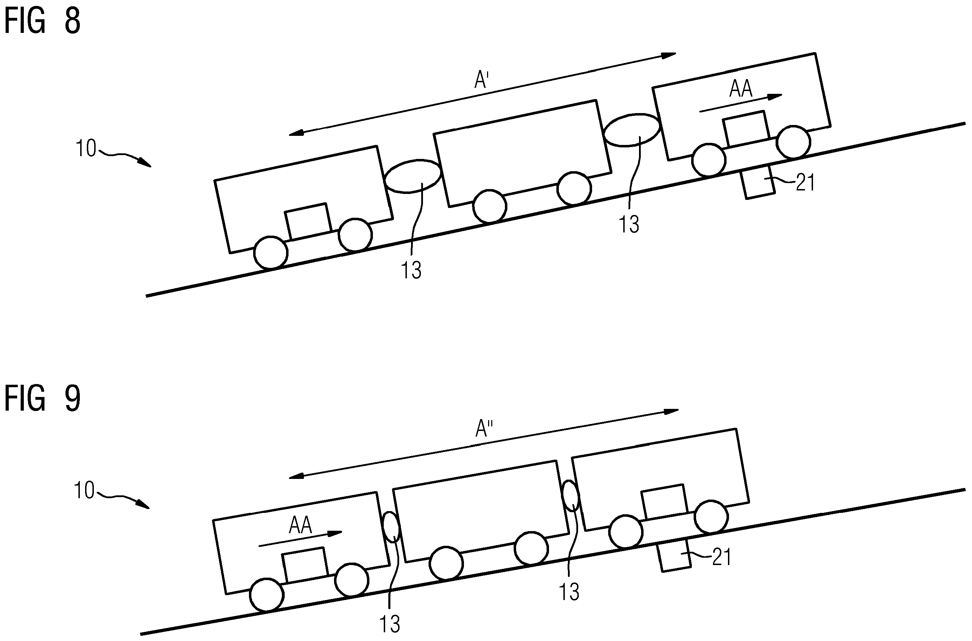

Auch kann das Softwaremodul M305 aus dem Streckenatlas ATL eine Gefälleangabe auslesen, aus der sich ableiten lässt, ob beim Passieren der Balise 21 eine Talfahrt oder eine Bergfahrt erfolgt. Anhand einer solchen Zusatzangabe ZA und anhand der jeweiligen Antriebssituation kann das Softwaremodul M305 den Abstand A zwischen den Detektionseinrichtungen mit Blick auf gestauchte oder auseinander gezogene Kupplungen 13 zwischen den Detektionseinrichtungen korrigieren, bevor auf der Basis des angenommenen Abstands der aktuelle Messwert errechnet wird. Dies soll anhand zweier in den Figuren 8 und 9 gezeigter Szenarien näher erläutert werden:

Liest das Softwaremodul M305 aus dem Streckenatlas ATL beispielsweise aus, dass eine Bergfahrt erfolgt, wie die Figur 8 zeigt, und zeigt eine Antriebsangabe AA an, dass das Schienenfahrzeug ausschließlich vorn angetrieben wird, also der Zugverband gezogen wird, so kann das Softwaremodul M305 auf gestreckte Kupplungen 13 und einen - gegenüber dem in den Figuren 1 und 2 dargestellten, gemittelten Normalzustand - gestreckten Zustand der Kupplungen 13 schließen, wodurch es zu einem vergrößerten Abstand **A'** zwischen den Detektionseinrichtungen 101 und 102 kommt. Diesen Umstand kann das Softwaremodul M305 berücksichtigen, indem es den aktuellen Messwert D berechnet gemäß:

$$D = (A' * 360°)/(U * \pi)$$

wobei A' den Abstand zwischen den Detektionseinrichtungen 101 und 102 bei gestreckten Kupplungen 13 bezeichnet.

Liest das Softwaremodul M305 aus dem Streckenatlas ATL hingegen beispielsweise aus, dass eine Bergfahrt erfolgt, und zeigt eine Antriebsangabe AA an, dass der Eisenbahnzug 10 ausschließlich hinten angetrieben wird, also der Zugverband geschoben wird (siehe Figur 9), so kann das Softwaremodul M305 auf einen - verglichen mit dem in den Figuren 1 und 2 dargestellten mittlen Normalzustand - gestauchten Zustand der Kupplungen 13 schließen, wodurch es zu einem reduzierten Abstand A" zwischen den Detektionseinrichtungen 101 und 102 kommt. Diesen Umstand kann das Softwaremodul M305 berücksichtigen, indem es den aktuellen Messwert berechnet gemäß:

$$D = (A'' * 360°)/(U * \pi)$$

wobei **A"** den Abstand zwischen den Detektionseinrichtungen 101 und 102 bei gestauchten Kupplungen 13 bezeichnet.

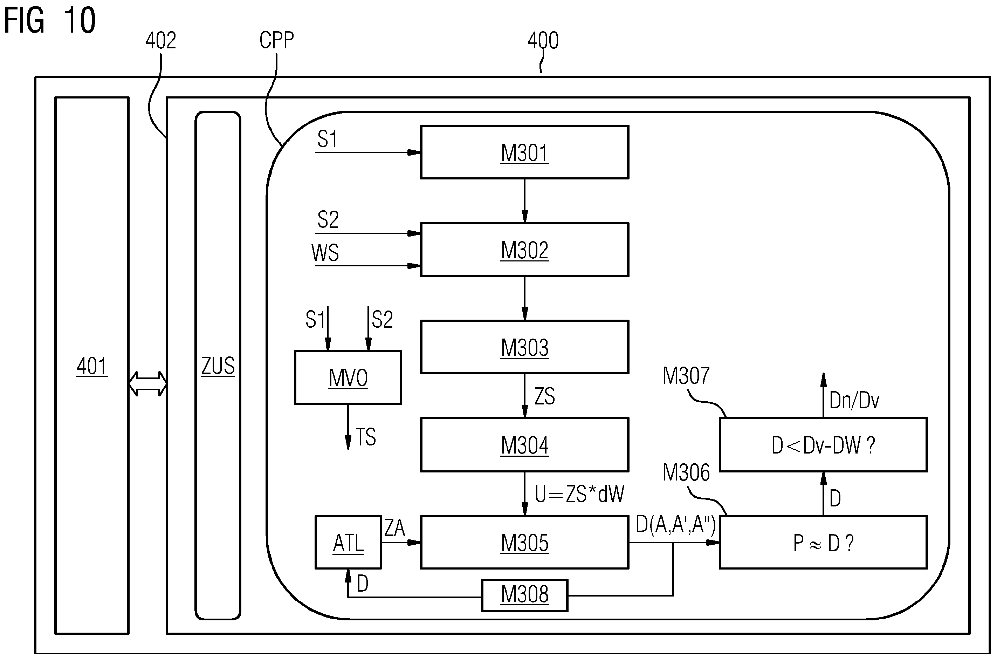

Die Figur 10 zeigt als fünftes Ausführungsbeispiel für eine Auswerteinrichtung 104, die bei dem Eisenbahnzug 10 gemäß den Figuren 1 und 2 eingesetzt werden kann, eine Ausführungsvariante des vierten Ausführungsbeispiels.

Bei der Ausführungsvariante gemäß Figur 10 umfasst das Computerprogrammprodukt CPP außerdem ein Statistikmodul M108, das die jeweils aktuell ermittelten Messwerte D des Softwaremoduls M305 für jeden Streckenpunkt radindividuell abspeichert.

Das Statistikmodul M108 führt außerdem eine statistische Auswertung der abgespeicherten radindividuellen Messwerte D radbezogen für jeden Streckenpunkt unter Einbezug von Messwerten von streckenmäßig benachbarten Streckenpunkten unter Bildung einer Streckenpunkteignungsangabe durch. Die Streckenpunkteignungsangabe wird in dem Streckenatlas ATL abgespeichert.

Liegt beispielsweise einer der Streckenpunkte in einem Kurvenbereich, wo der Krümmungsradius der Schienen die Messung der Raddurchmesser beeinflussen und verfälschen kann, so kann dies durch die beschriebene statistische Auswertung anhand der Streuung der Messwerte D erkannt werden und bei der Bildung der Streckenpunkteignungsangabe derart berücksichtigt werden, dass diese den Einfluss des Kurvenbereichs auf die Messwerte D quantitativ beispielsweise in Form einer Messfehlerangabe beschreibt.

Bezugszeichenlist

| | |
|---|---|
| 10 | Eisenbahnzug |
| 11 | Rad |
| 12 | Wagen |
| 13 | Kupplung |
| 20 | Eisenbahngleisanlage |
| 21 | Balise |
| 100 | Messeinrichtung |
| 101 | vordere Detektionseinrichtung |
| 102 | hintere Detektionseinrichtung |
| 103 | Drehwinkelsensor |
| 104 | Auswerteinrichtung |
| 301 | Überwachungsschritt |
| 302 | Zählschritt |
| 303 | Speicherschritt |
| 304 | Radumdrehungsermittlungsschritt |
| 305 | Durchmesserermittlungsschritt |
| 400 | Zugsicherungs- und/oder Zugsteuerungssystem |
| 401 | Recheneinrichtung |
| 402 | Speicher |
| | |
| A | Abstand |
| A' | vergrößerter Abstand |
| A" | reduzierter Abstand |
| AA | Antriebsangabe |
| ATL | Streckenatlas |
| CPP | Computerprogrammprodukt |
| dW | Drehwinkelinkrementwert |
| D | Messwert |
| Dn | Durchmesserangabe |
| Dv | Durchmesserangabe |
| DW | Differenzwert |
| F | Fahrtrichtung |
| M301 | Überwachungssoftwaremodul |
| M302 | Zählsoftwaremodul |
| M303 | Speichersoftwaremodul |
| M304 | Softwaremodul zur Radumdrehungsermittlung |
| M305 | Softwaremodul zur Durchmesserermittlung |
| M306 | Plausibilitätsmodul |
| M307 | Ausgabemodul |

| M308 | Statistikmodul |
|---|---|
| MVO | Vorgabemodul |
| P | Prognosewert |
| S1 | Passierereignissignal |
| S2 | Passierereignissignal |
| TS | Triggersignal |
| U | Raddrehwinkelangabe |
| WS | Winkelinkrementsignal |
| ZA | Zusatzangabe |
| ZS | Zählerstand |
| ZUS | Zugsicherungs- und/oder Zugsteuerungssoftware |

**Patentansprüche**

1. Verfahren zum Ermitteln des Raddurchmessers eines Rades (11) eines Fahrzeugs (10),
   **dadurch gekennzeichnet, dass**

   - während der Fahrt ein Passieren eines Streckenpunkts (21) mit einer in Fahrtrichtung (F) vorderen Detektionseinrichtung (101) als erstes Passierereignis detektiert wird,
   - während der weiteren Fahrt ein Passieren desselben Streckenpunkts (21) mit einer in Fahrtrichtung (F) hinteren Detektionseinrichtung (102) als zweites Passierereignis detektiert wird,
   - die Raddrehung des Rades (11) messtechnisch erfasst wird und eine die Radumdrehung zwischen dem ersten und zweiten Passierereignis angebende Raddrehwinkelangabe (U) ermittelt wird, und
   - anhand des Abstands (A, A', A") zwischen der vorderen und der hinteren Detektionseinrichtung (101, 102) und der Raddrehwinkelangabe (U) ein den Raddurchmesser angebender aktueller Messwert (D) ermittelt wird.

2. Verfahren nach Anspruch 1,
   **dadurch gekennzeichnet, dass**
   das Fahrzeug (10) zwischen dem ersten und zweiten Passierereignis mit konstanter Geschwindigkeit betrieben wird.

3. Verfahren nach einem der voranstehenden Ansprüche,
   **dadurch gekennzeichnet, dass**

   - das Fahrzeug (10) zumindest zwei miteinander gekuppelte Wagen (12) aufweist und die vordere und hintere Detektionseinrichtung (101, 102) durch zumindest eine Kupplung (13) getrennt sind, und
   - das Fahrzeug (10) zwischen dem ersten und zweiten Passierereignis mit fest vordefinierten Antriebsverhältnissen angetrieben wird.

4. Verfahren nach Anspruch 3,
   **dadurch gekennzeichnet, dass**
   die fest vordefinierten Antriebsverhältnisse vorsehen, dass das Fahrzeug (10) ausschließlich mit einer oder mehreren Antriebseinheiten angetrieben wird, die den mit der vorderen Detektionseinrichtung (101) ausgestatteten Wagen (12) und/oder in Fahrtrichtung (F) davor befindliche Wagen (12) antreiben.

5. Verfahren nach Anspruch **3,**
   **dadurch gekennzeichnet, dass**
   die fest vordefinierten Antriebsverhältnisse vorsehen, dass das Fahrzeug (10) ausschließlich mit einer oder mehreren Antriebseinheiten angetrieben wird, die den mit der hinteren Detektionseinrichtung (102) ausgestatteten Wagen (12) und/oder in Fahrtrichtung (F) dahinter befindliche Wagen (12) antreiben.

6. Verfahren nach einem der voranstehenden Ansprüche,
   **dadurch gekennzeichnet, dass**

   - das Fahrzeug (10) zwischen dem ersten und zweiten Passierereignis derart betrieben wird, dass zumindest das Rad (11), dessen Raddurchmesser ermittelt werden soll, nicht angetrieben und nicht gebremst wird und/oder
   - das Fahrzeug (10) zwischen dem ersten und zweiten Passierereignis insgesamt ungebremst und antriebsfrei betrieben wird.

7. Verfahren nach einem der voranstehenden Ansprüche,
   **dadurch gekennzeichnet, dass**
   der aktuelle Messwert (D) einer Plausibilitätsprüfung unterzogen wird und dieser ausschließlich bei Plausibilität zur Bildung einer neuen Durchmesserangabe (Dn) herangezogen wird, die eine vorherige Durchmesserangabe (Dv) ersetzt.

8. Verfahren nach Anspruch 7,
   **dadurch gekennzeichnet, dass**
   im Rahmen der Plausibilitätsprüfung der jeweils aktuelle Messwert (D) mit einem oder mehr vorherigen, sich auf dasselbe Rad (11) beziehenden Durchmesserangaben (Dv) und/oder mit einem Prognosewert (P) verglichen wird, der anhand eines oder mehr vorheriger, sich auf dasselbe Rad (21) beziehenden Durchmesserangaben (Dv) gebildet worden ist.

9. Verfahren nach Anspruch 7 oder 8,
   **dadurch gekennzeichnet, dass**
   im Rahmen der Plausibilitätsprüfung geprüft wird, ob der jeweils aktuelle Messwert (D) mit der vorherigen Durchmesserangabe (Dv) und der seit der vorherigen Messung zurückgelegten Wegstrecke korrespondiert.

**10.** Verfahren nach einem der voranstehenden Ansprüche,
**dadurch gekennzeichnet, dass**

- im Falle, dass der jeweils aktuelle Messwert (D) kleiner als eine vorherige Durchmesserangabe (Dv) abzüglich eines vorgegebenen Differenzwerts (DW) ist, die vorherige Durchmesserangabe (Dv) um den vorgegebenen konstanten Differenzwert (DW) reduziert wird und die reduzierte Durchmesserangabe als neue aktuelle Durchmesserangabe (Dn) angesehen wird, und
- andernfalls die vorherige Durchmesserangabe (Dv) weiterhin als aktuelle Durchmesserangabe angesehen wird.

**11.** Verfahren nach einem der voranstehenden Ansprüche,
**dadurch gekennzeichnet, dass**

- die Ermittlung des aktuellen Messwerts (D) unter Einbezug eines Streckenatlas (ATL) durchgeführt wird,
- indem aus dem Streckenatlas (ATL) für denjenigen Streckenpunkt (21), für den die aktuelle Messung durchgeführt wird, zumindest eine Zusatzangabe (ZA) ausgelesen wird.

**12.** Verfahren nach Anspruch 11,
**dadurch gekennzeichnet, dass**

- die jeweils aktuell ermittelten Messwerte (D) für jeden Streckenpunkt (21) radindividuell abgespeichert werden und
- eine statistische Auswertung der abgespeicherten radindividuellen Messwerte (D) radbezogen für jeden Streckenpunkt (21), vorzugsweise auch unter Einbezug von Messwerten (D) von streckenmäßig benachbarten Streckenpunkten, unter Bildung einer Streckenpunkteignungsangabe durchgeführt wird.

**13.** Messeinrichtung (100) für ein Schienenfahrzeug (10),
**dadurch gekennzeichnet, dass**

- die Messeinrichtung (100) zwei in Fahrzeuglängsrichtung beabstandete Detektionseinrichtungen (101, 102), einen Drehwinkelsensor (103) und eine Auswerteinrichtung (104) aufweist,
- wobei die Detektionseinrichtungen (101, 102) geeignet sind, das Passieren eines Streckenpunkts während der Fahrt (21) zu detektieren, und dabei ein erstes Passierereignis und zweites Passierereignis zu erfassen,
- wobei die Auswerteinrichtung (104) dazu ausgestaltet ist, anhand erkannter Passierereignisse, anhand von Drehwinkelangaben des Drehwinkelsensors (103) und anhand des Abstands (A, A', A") zwischen den Detektionseinrichtungen (101, 102) einen den Raddurchmesser angebenden aktuellen Messwert (D) zu ermitteln.

**14.** Computerprogrammprodukt (CPP) für ein Schienenfahrzeug (10) mit einer Messeinrichtung nach Anspruch 13,
**dadurch gekennzeichnet, dass**

das Computerprogrammprodukt (CPP) Programmbefehle umfasst,
die bei Ausführung durch eine Recheneinrichtung (401), insbesondere eine Recheneinrichtung (401) eines Zugsicherungs- oder Zugsteuerungssystems (400), diese dazu veranlassen, ein Verfahren nach einem der voranstehenden Ansprüche 1 bis 12 auszuführen.

**15.** Schienenfahrzeug (10),
**dadurch gekennzeichnet, dass**
das Schienenfahrzeug (10) eine Messeinrichtung (100) nach Anspruch 13 aufweist.

**Claims**

**1.** Method for determining the wheel diameter of a wheel (11) of a vehicle (10),
**characterised in that**

- during the journey a passing of a route point (21) is detected as a first passing event with a front detection facility (101) in the direction of travel (F),
- during the further journey, a passing of the same route point (21) is detected as a second passing event with a rear detection facility (102) in the direction of travel (F),
- the wheel rotation of the wheel (11) is captured using measurement technology and a wheel rotation angle specification (U) specifying the wheel rotation between the first and second passing event is determined, and
- a current measured value (D) specifying the wheel diameter is determined on the basis of the distance (A, **A'**, A'') between the front and the rear detection facility (101, 102) and the wheel rotation angle specification (U).

**2.** Method according to claim **1,**
**characterised in that**
the vehicle (10) is operated at a constant speed between the first and second passing event.

**3.** Method according to one of the preceding claims,
**characterised in that**

- the vehicle (10) has at least two carriages (12) which are coupled to one another and the front and rear detection facility (101, 102) are separated by means of at least one coupling (13), and
- the vehicle (10) is driven with fixedly predefined drive conditions between the first and second passing event.

4. Method according to claim 3, **characterised in that** the fixedly predefined drive conditions provide that the vehicle (10) is driven exclusively with one or more drive units which drive the carriage (12) equipped with the front detection facility (101) and/or carriages (12) located in front in the direction of travel (F).

5. Method according to claim 3, **characterised in that** the fixedly predefined drive conditions provide that the vehicle (10) is driven exclusively with one or more drive units which drive the carriage (12) equipped with the rear detection facility (102) and/or carriage (12) located therebehind in the direction of travel (F).

6. Method according to one of the preceding claims, **characterised in that**

- the vehicle (10) is operated between the first and second passing event so that at least the wheel (11), the wheel diameter of which is to be determined, is not driven and not braked and/or
- the vehicle (10) is operated in an overall unbraked and drive-free manner between the first and second passing event.

7. Method according to one of the preceding claims, **characterised in that** the current measured value (D) is subject to a plausibility check and if plausible this is used exclusively to form a new diameter specification (Dn) which replaces a previous diameter specification (Dv).

8. Method according to claim **7**, **characterised in that** within the scope of the plausibility check the respective current measured value (D) is compared with one or more previous diameter specifications (Dv) relating to the same wheel (11) and/or with a forecast value (P) which has been formed on the basis of one or more previous diameter specifications (Dv) relating to the same wheel (21).

9. Method according to claim 7 or **8**, **characterised in that** a check is carried out within the scope of the plausibility check to determine whether the respective current measured value (D) corresponds to the previous diameter specification (Dv) and the route point covered since the previous measurement.

10. Method according to one of the preceding claims, **characterised in that**

- in the event that the respective current measured value (D) is smaller than a previous diameter specification (Dv) minus a predetermined differential value (DW), the previous diameter specification (Dv) is reduced by the predetermined constant differential value (DW) and the reduced diameter specification is considered to be a new current diameter specification (Dn), and
- on the other hand, the previous diameter specification (Dv) is also considered to be a current diameter specification.

11. Method according to one of the preceding claims, **characterised in that**

- the determination of the current measured value (D) is performed by including a route atlas (ATL),
- since at least one additional specification (ZA) is read out from the route atlas (ATL) for that route point (21) for which the current measurement is performed.

12. Method according to claim 11, **characterised in that**

- the respective currently determined measured values (D) are stored for each route point (21) individually for each wheel and
- a statistical evaluation of the measured values (D) stored individually for each wheel is carried out in a wheel-related manner for each route point (21), preferably also including measured values (D) of route points which are adjacent to one another in terms of route, by forming a route point suitability specification.

13. Measuring facility (100) for a rail vehicle (10), **characterised in that**

- the measuring facility (100) has two detection facilities (101, 102) arranged at a distance in the vehicle longitudinal direction, a rotation angle sensor (103) and an evaluation facility (104),
- wherein the detection facilities (101, 102) are suited to detecting the passing of a route point during the journey (21) and in the process to capturing a first passing event and a second passing event,
- wherein the evaluation facility (104) is designed to determine a current measured value (D) specifying the wheel diameter on the basis of identified passing events, on the basis of rotation angle specifications of the rotation angle sensor (103) and on the basis of the distance (A, A', A'') between the detection facilities (101, 102).

14. Computer program product (CPP) for a rail vehicle (10) with a measuring facility according to claim 13, **characterised in that** the computer program product (CPP) comprises program commands, which, upon execution by a computing facility (401), in particular a computing facility (401) of an automatic train protection or control system (400), cause this to execute a method according to one of the preceding claims 1 to 12.

15. Rail vehicle (10), **characterised in that** the rail vehicle (10) has a measuring facility (100) according to claim 13.


**Revendications**

1. Procédé de détermination du diamètre d'une roue (11) d'un véhicule (10), **caractérisé en ce que**,

 - pendant la circulation, on détecte, comme premier évènement de passage, par un dispositif (101) de détection en amont dans le sens (F) de circulation, un passage par un point (21) de la voie,
 - pendant que la circulation se continue, on détecte, comme deuxième évènement de passage par un dispositif (102) de détection en aval dans le sens (F) de la circulation, un passage par le même point (21) de la voie,
 - on détecte, en technique de mesure, la rotation de la roue (11) et on détermine une indication (U) angulaire de rotation de la roue indiquant la rotation de la roue entre le premier et le deuxième évènements de passage, et
 - à l'aide de la distance (A, A', A'') entre le dispositif (101) de détection en amont et le dispositif (102) de détection en aval et de l'indication (U) angulaire de rotation de la roue, on détermine une valeur (D) de mesure en cours indiquant le diamètre de la roue.

2. Procédé suivant la revendication 1, **caractérisé en ce que** l'on fait fonctionner le véhicule (10) à une vitesse constante entre le premier et le deuxième évènements de passage.

3. Procédé suivant l'une des revendications précédentes,

**caractérisé en ce que**

 - le véhicule (10) a au moins deux voitures (12) accouplées l'une à l'autre et le dispositif (101) de détection en amont et le dispositif (102) de détection en aval sont séparés par au moins un accouplement (13), et
 - on fait fonctionner le véhicule (10) à des rapports d'entraînement définis à l'avance de manière fixe entre le premier et le deuxième évènements de passage.

4. Procédé suivant la revendication 3, **caractérisé en ce que** les rapports d'entraînement définis à l'avance de manière fixe prévoient d'entraîner le véhicule (10) exclusivement par une ou plusieurs unités d'entraînement, qui entraînent la voiture (12) équipée du dispositif (101) de détection en amont et/ou la voiture (12) se trouvant en amont dans le sens (F) de la circulation.

5. Procédé suivant la revendication 3, **caractérisé en ce que** les rapports d'entraînement définis à l'avance de manière fixe prévoient d'entraîner le véhicule (10) exclusivement par une ou par plusieurs unités d'entraînement, qui entraînent la voiture (12) équipée du dispositif (102) de détection en aval et/ou la voiture (12) se trouvant en aval dans le sens (F) de la circulation.

6. Procédé suivant l'une des revendications précédentes,

**caractérisé en ce que**

 - l'on fait fonctionner le véhicule (10) entre le premier et le deuxième évènements de passage, de manière à ne pas entraîner et à ne pas freiner au moins la roue (11), dont on doit déterminer le diamètre et/ou
 - on fait fonctionner le véhicule (10) dans l'ensemble sans le freiner et sans l'entraîner entre le premier et le deuxième évènements de passage.

7. Procédé suivant l'une des revendications précédentes,

**caractérisé en ce que** l'on soumet la valeur (D) de mesure en cours à un contrôle de vraisemblance et on en tire parti exclusivement pour la vraisemblance lors de la formation d'une nouvelle indication (Dn) de diamètre, qui remplace une indication (Dv) de diamètre précédent.

8. Procédé suivant la revendication 7, **caractérisé en ce que**, dans le cadre du contrôle de vraisemblance, on compare la valeur (D) de mesure en cours respective à une ou à plusieurs indications (Dv) de diamètre précédentes se rapportant à la même roue (11) et/ou à une valeur (P) de pronostic, qui a été formée à l'aide d'une ou de plusieurs indications (Dv) de diamètre précédentes se rapportant à la même roue (21).

9. Procédé suivant la revendication 7 ou 8, **caractérisé en ce que** l'on contrôle, dans le cadre du contrôle de vraisemblance, si la valeur (D) de mesure en cours respective correspond à l'indication (Dv) de diamètre précédente et au chemin parcouru depuis la mesure précédente.

10. Procédé suivant l'une des revendications précédentes, **caractérisé en ce que**,

- dans le cas où la valeur (D) de mesure en cours respective est plus petite qu'une indication (Dv) précédente de diamètre, déduction faite d'une valeur (DW) de différence donnée à l'avance, on réduit l'indication (Dv) précédente de diamètre de la valeur (DW) constante donnée à l'avance de différence et on considère l'indication réduite de diamètre comme nouvelle indication (Dn) en cours de diamètre, et
- sinon on continue à considérer l'indication (Dv) précédente de diamètre comme indication en cours du diamètre.

11. Procédé suivant l'une des revendications précédentes, **caractérisé en ce que**

- l'on effectue la détermination de la valeur (D) de mesure en cours en incluant un atlas (ATL) de voie,
- par le fait que l'on lit, dans l'atlas (ATL) de voie pour le point (21) de voie respectif, pour lequel on effectue la mesure en cours, au moins une indication (ZA) supplémentaire.

12. Procédé suivant la revendication 11, **caractérisé en ce que**

- l'on met en mémoire, individuellement par roue, les valeurs (D) de mesure déterminées en cours respectives pour chaque point (21) sur la voie et
- l'on effectue une évaluation statistique des valeurs (D) de mesure individuelles par roue mises en mémoire, rapportée à une roue pour chaque point (21) de la voie, en incluant de préférence également des valeurs (D) de mesure de points voisins sur la voie avec formation d'une indication propre au point de la voie.

13. Dispositif (100) de mesure pour un véhicule (10) ferroviaire, **caractérisé en ce que**

- le dispositif (100) de mesure a deux dispositifs (101, 102) de détection à distance dans la direction longitudinale du véhicule, un capteur (103) d'angle de rotation et un dispositif (104) d'évaluation,
- dans lequel les dispositifs (101, 102) de détection sont propres à détecter le passage sur un point de la voie pendant la circulation (21) et à identifier un premier évènement de passage et un deuxième évènement de passage,
- dans lequel le dispositif (104) d'évaluation est conformé pour déterminer, à l'aide des évènements de passage identifiés, à l'aide des indications d'angle de rotation du capteur (103) d'angle de rotation et à l'aide de la distance (A, A', A'') entre les dispositifs (101, 102) de détection, une valeur (D) de mesure en cours indiquant le diamètre de la roue.

14. Produit (CPP) de programme d'ordinateur pour un véhicule (10) ferroviaire ayant un dispositif de mesure suivant la revendication 13, **caractérisé en ce que** le produit (CPP) de programme d'ordinateur comprend des instructions de programme qui, lors de l'exécution par un dispositif (401) informatique, en particulier par un dispositif (401) informatique d'un système (400) de sécurité des trains ou de commande des trains, font que ce dispositif informatique exécute un procédé suivant l'une des revendications 1 à 12 précédentes.

15. Véhicule (10) ferroviaire, **caractérisé en ce que** le véhicule (10) ferroviaire a un dispositif (100) de mesure suivant la revendication 13.

FIG 1

FIG 2

# FIG 3

# FIG 4

FIG 5

FIG 6

# FIG 7

EP 4 439 007 B1

# FIG 8

# FIG 9

EP 4 439 007 B1

# FIG 10

EP 4 439 007 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2013158894 A1
- JP H0692897 B
- DE 102016223435 A1